# FASCICULE DE BREVET EUROPEEN

(11) **EP 0 459 859 B1**
(45) Date de publication et mention de la délivrance du brevet: **05.01.1994**
(21) Numéro de dépôt: 91401269.5
(22) Date de dépôt: 16.05.1991
(51) Int. Cl.: F16H 3/38, F16H 63/20, F16H 63/36

(54) **Dispositif de freinage de pignons pour boîte de vitesses de véhicule automobile**
Einrichtung zum Bremsen von Zahnrädern eines Fahrzeuggetriebes
Device for braking gears in a gearbox of a motor vehicle

(30) Priorité: 30.05.1990 FR 9006738
(43) Date de publication de la demande: 04.12.1991
(73) Titulaire: AUTOMOBILES PEUGEOT, 75116 Paris (FR); AUTOMOBILES CITROEN, 92200 Neuilly-sur-Seine (FR)
(72) Inventeur: Clavelin, André, F-25550 Raynans (FR)
(74) Mandataire: Polus, Camille

(56) Documents cités:
- EP-A- 0 300 843
- FR-A- 2 584 791
- GB-A- 2 174 465
- US-A- 4 510 818
- US-A- 4 605 109

## Description

Les boîtes de vitesses de véhicule automobile comportent généralement, en association avec chaque rapport de marche avant, un synchroniseur, le plus souvent de type à friction, qui amène à la même vitesse de rotation les deux pièces à accoupler et facilite ainsi le passage du rapport correspondant.

Cette disposition s'est toutefois révélée peu adaptée pour équiper un rapport court de boîte de vitesses tel que, par exemple, la marche arrière. Or, lors de l'engagement d'un tel rapport, à l'arrêt du véhicule, l'inertie en rotation des engrenages provoque un craquement très désagréable pour l'utilisateur du véhicule et nuisible à l'endurance de la boîte de vitesses, ou même parfois une impossibilité de passage du rapport.

On a donc proposé d'assurer un freinage des pignons lors du passage d'un rapport non synchronisé, par exemple de marche arrière, au moyen de l'un des synchroniseurs des autres rapports de la boîte de vitesses, en entraînant partiellement ce synchroniseur au début de la course de sélection et de passage de la marche arrière.

Un dispositif de ce type est décrit dans le brevet US n° 4 510 818 dans lequel le synchroniseur équipant le quatrième rapport de marche avant d'une boîte de vitesses à cinq rapports de marche avant et un rapport de marche arrière, est mis en action par le déplacement de la crosse correspondante, sous l'action d'un organe de verrouillage déplacé en même temps que l'organe de sélection de marche arrière.

Un tel dispositif suppose toutefois l'utilisation de plusieurs pièces frottantes, c'est-à-dire une réalisation complexe. En outre l'actionnement du synchroniseur est obtenu par entraînement d'une autre crosse que celle de la marche arrière, c'est-à-dire de manière imprécise, ce qui ne permet pas une suppression réelle des craquements lors du passage du rapport de marche arrière.

Un autre dispositif de freinage, décrit dans la demande de brevet français de la Demanderesse, déposée sous le n° 87 10 239, utilise le synchroniseur de rapport le plus élevé. Ce synchroniseur est mis en action grâce à la coopération d'une rampe, formée sur une partie de la crosse de commande d'un premier coulisseau, avec le doigt de commande du rapport non synchronisé, lorsque ce doigt est amené en vis-à-vis d'un élément d'entraînement solidaire d'un second coulisseau. La commande du synchroniseur est précise et souple mais la réalisation de la boîte de vitesses reste complexe.

La présente invention a pour but de remédier à ces inconvénients en fournissant un dispositif de freinage de pignons qui, tout en utilisant l'un des synchroniseurs de la boîte de vitesses, soit simple à réaliser et peu encombrant.

Cette invention a en effet pour objet un dispositif de freinage des pignons d'une boîte de vitesses de véhicule automobile comportant un rapport non synchronisé et au moins un rapport équipé d'un synchroniseur qui sont engagés à l'aide d'au moins une crosse coulissante, entraînée par un organe de commande de sélection et de passage qui coulisse perpendiculairement à la direction de déplacement des crosses en vue de la sélection d'au moins un rapport, et pivote, parallèlement à l'axe de coulissement des crosses dans un premier sens pour le passage du rapport non synchronisé et dans un second sens, opposé au premier, pour le passage d'un rapport équipé d'un synchroniseur et commandé par une crosse extrême, et un organe de verrouillage qui est entraîné avec l'organe de commande lors du coulissement de sélection et qui immobilise les crosses non sélectionnées, caractérisé en ce qu'il comporte des moyens de déplacement de la crosse extrême de rapport équipé d'un synchroniseur, dans le second sens, jusqu'à la mise en action d'un synchroniseur, dès que l'organe de verrouillage a libéré cette crosse extrême.

Selon un mode de réalisation préféré de l'invention, les moyens de déplacement de la crosse extrême comportent un ressort de rappel de l'axe portant cette crosse vers sa position de mise en action du synchroniseur.

De préférence la branche de la crosse extrême opposée à la branche de passage du rapport équipé d'un synchroniseur comporte une échancrure s'emboîtant sur l'organe de commande lors du déplacement de la crosse sous l'effet des moyens de déplacement.

La description ci-dessous d'un mode de réalisation, donné à titre d'exemple non limitatif et représenté aux dessins annexés, fera ressortir les avantages et caractéristiques de l'invention. Sur ces dessins :

La figure 1 est une vue schématique, partiellement en coupe, d'un dispositif de freinage selon l'invention monté dans une boîte de vitesses à cinq rapports de marche avant et un rapport de marche arrière.

La figure 2 est une vue en perspective de l'ensemble formé par l'organe de verrouillage et l'organe de commande de sélection et de passage.

La figure 3 est une vue en coupe suivant la ligne 3/3 de la Fig.4 montrant le dispositif en position de freinage.

La figure 4 est une vue en coupe suivant la ligne 4/4 de la Fig.3.

Les figures 5 et 6 sont des vues analogues aux Fig.3 et 4 montrant le dispositif en position d'engagement de la marche arrière.

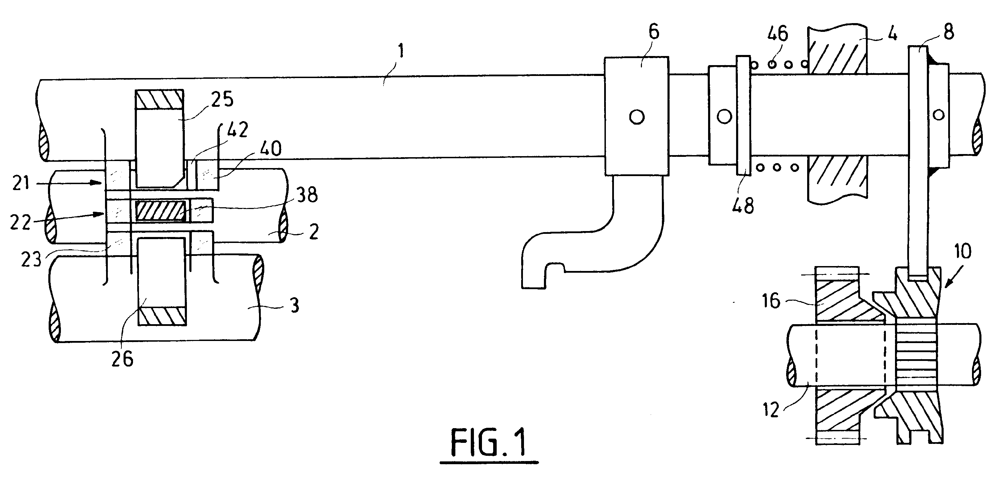

La Fig.1 représente schématiquement le dispositif de commande interne d'une boîte de vitesses à cinq rapports de marche avant et un rapport de marche arrière. Cette boîte de vitesses comporte trois axes de passage, respectivement 1, 2 et 3, qui sont montés coulissants et parallèles entre eux à l'intérieur d'un carter 4. Le coulissement de l'axe inférieur 3 provoque le passage du premier ou du second rapport selon qu'il est effectué vers la gauche ou vers la droite, en considérant la Fig.1. Le coulissement de l'axe 2 provoque le passage du troisième ou du quatrième rapport selon que ce déplacement est effectué vers la gauche ou vers la droite en considérant la Fig.1. Le coulissement de l'axe 1 vers la gauche de la Fig.1 provoque le passage du cinquième rapport, tandis que son coulissement vers la droite provoque le passage du rapport de marche arrière.

L'axe 1 porte en effet, d'une part un renvoi de marche arrière 6 et, d'autre part, une fourchette de cinquième rapport 8 en prise avec un synchroniseur 10 qui, dans le mode de réalisation représenté, est du type à friction et à cône.

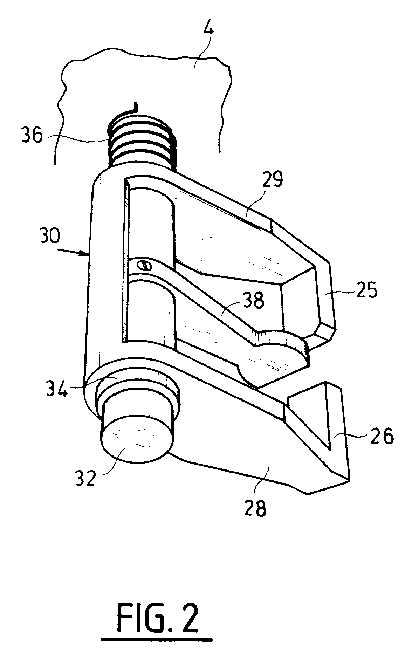

Chacun des axes coulissants 1, 2 et 3 comporte une crosse de passage respectivement 21, 22 et 23, et dans la position de point mort les trois crosses sont superposées les unes aux autres ainsi que le montre la Fig.1. Dans cette position, les crosses extrêmes 21 et 23 sont en outre immobilisées par deux pattes de verrouillage 25 et 26 qui sont formées aux extrémités des bras 28 et 29 d'un organe de verrouillage 30 en forme d'étrier (Fig.2). L'étrier 30 est porté par un axe de commande de sélection et de passage 32 dont il est rendu solidaire axialement seulement par des bagues 34. Il est empêché de pivoter par des moyens non représentés.

L'axe de commande 32 est dirigé perpendiculairement aux axes coulissants 1, 2 et 3 il est monté à la fois coulissant et rotatif dans le carter 4 de la boîte de vitesses. Un ressort hélicoïdal 36, enroulé sur l'axe 32 et en appui d'une part sur lui et d'autre part sur le carter 4, rappelle cet axe ainsi que l'étrier 30 dans la position de verrouillage des crosses 21 et 23 correspondant à la position de point mort. Dans ce but les pattes de verrouillage 25 et 26 sont dirigées l'une vers l'autre parallélement à l'axe de commande 32 mais sont séparées par une distance légèrement supérieure à l'épaisseur de la crosse centrale 22.

L'axe de commande 32 est en outre solidaire d'un doigt de sélection et de passage 38 qui est parallèle aux branches latérales 28, 29 de l'étrier 30. Le doigt 38 a une longueur inférieure à celle des branches de l'étrier mais cependant suffisante pour que son extrémité puisse venir en contact avec l'une ou l'autre des branches latérales des crosses afin de provoquer le passage du rapport correspondant.

Dans la position de point mort, le doigt 38 est à l'intérieur de la crosse centrale 22 et est en conséquence prêt à provoquer le passage du troisième ou du quatrième rapport lors d'un pivotement sur lui-même de l'axe 32 vers la gauche ou vers la droite.

Les faces internes des branches latérales de cette crosse 22, comme celles de la crosse 23, sont plates et perpendiculaires à l'axe coulissant correspondant, de sorte que les couloirs de passage de ces deux crosses ont une largeur constante sur toute leur profondeur. Par contre, la branche latérale 40, ou branche de passage de marche arrière, de la crosse 21 comporte une échancrure 42 dans sa partie radialement extérieure, c'est-à-dire à l'extérieur par rapport à la patte de verrouillage 25 et au niveau de l'extrémité du doigt 38. Au-delà de l'échancrure 42, c'est-à-dire dans le fond de la crosse 21, le couloir délimité par les branches de la crosse 21 a la même largeur que celui des autres crosses c'est-à-dire une largeur légèrement supérieure à celle des pattes 25 et 26.

Dans ce fond de la crosse 21, la face interne 44 de la branche 40 est maintenue en contact avec la patte de verrouillage 25 par l'action d'un ressort hélicoïdal 46, monté autour de l'axe 1 entre le carter 4 et une bride 48 fixée sur l'axe 1, et repoussant cet axe 1 dans la direction de passage du cinquième rapport de marche avant (vers la gauche de la Fig.1).

Un déplacement axial de l'axe de commande 32 provoque un déplacement correspondant à la fois de l'organe de verrouillage 30 et du doigt de sélection et de passage 38 en vue de la sélection des rapports, tandis que la rotation sur lui-même de ce même axe 32 déplace le doigt 38 par rapport à l'organe de verrouillage 30 et assure le passage du rapport choisi.

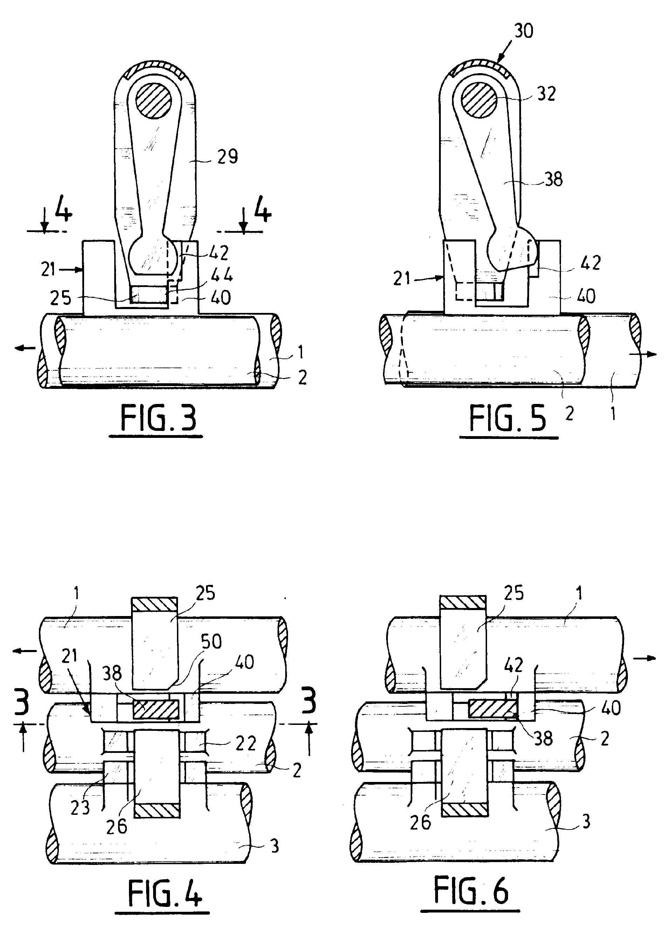

Lorsque l'on désire passer le rapport de marche arrière, le véhicule étant arrêté et la boîte de vitesses au point mort, on déplace axialement l'axe de commande 32 de façon à dégager la patte de verrouillage 25 de la crosse 21 en introduisant le doigt de sélection 38 dans cette crosse. Dès que la crosse 21 n'est plus retenue par la patte de verrouillage 25 et que l'extrémité du doigt 38 se trouve en regard de l'échancrure 42, l'axe 1 coulisse dans la direction de l'engagement du cinquième rapport sous l'action du ressort 46 (Fig.3 et 4). Dans ce mouvement, autorisé par l'échancrure 42 suffisamment profonde pour que la branche 40 ne heurte pas le doigt 38, l'axe 1 entraîne la fourchette 8 qui provoque le coulissement du synchroniseur 10 sur l'axe secondaire 12 et l'embrayage de ce synchroniseur avec le pignon 16 monté sur cet arbre. Comme le véhicule est arrêté, l'arbre secondaire 12 est immobile de sorte que le pignon 16 ainsi que l'ensemble de la pignonnerie de la boîte de vitesses est freiné par le synchroniseur 10.

L'axe de commande de passage 32 pivote alors latéralement pour entraîner le doigt 38 vers la droite en considérant les dessins, c'est-à-dire vers la position de passage du rapport de marche arrière. Ce doigt 38 repousse la branche 40 et entraîne la crosse 21 et l'axe 1, comme représenté sur les Fig.5 et 6, jusqu'au moment où le renvoi de marche arrière 6 entre en action.

Pendant ce pivotement de l'axe 32, l'organe de verrouillage 30, et par suite les pattes de verrouillage 25 et 26, sont restés immobiles et la patte 26 engagée dans les crosses 22 et 23 a interdit tout déplacement des axes coulissants 2 et 3.

Pour le retour au point mort, un pivotement en sens inverse de l'axe de commande 32 permet à l'action combinée du doigt 38 et du ressort 46 de ramener la crosse 21 dans sa position centrale et même dans la position de début de passage du cinquième rapport de marche avant dans laquelle le doigt 38 est aligné avec les pattes 25 et 26 tout en étant emboîté dans l'échancrure 42. Puis le doigt 38 est repoussé axialement, avec l'ensemble de l'organe de verrouillage 30 et de l'axe 32, par le ressort 36, en direction du couloir 22, et la patte 25, pénètre dans la crosse 21. Cette patte 25 comporte de préférence, dans ce but, à son extrémité libre, un chanfrein 50 correspondant sensiblement à la profondeur de l'encoche 42, ce qui lui permet de repousser progressivement vers la droite, en considérant les figures, la face interne 44 de la branche 40 de cette crosse 21 contre l'action du ressort 46. La crosse 21 s'aligne à nouveau avec les crosses 22 et 23 et reprend la position de point mort représenté sur la Fig.1.

L'engagement de la marche arrière s'est ainsi effectué sans craquement grâce à un freinage automatique et complet des pignons de la boîte de vitesses, bien que la réalisation de cette dernière soit particulièrement simple.

Bien entendu le dispositif de freinage de l'invention n'est pas limité à une boîte de vitesses comportant cinq rapports de marche avant, mais peut aisément être adapté à tout autre type de boîtes de vitesses ayant au moins un rapport équipé d'un synchroniseur.

## Revendications

1. Dispositif de freinage des pignons d'une boîte de vitesses de véhicule automobile comportant un rapport non synchronisé et au moins un rapport équipé d'un synchroniseur qui sont engagés à l'aide d'au moins une crosse coulissante (21, 22, 23), entraînée par un organe de commande de sélection et de passage (38) qui coulisse perpendiculairement à la direction du coulissement des crosses, en vue de la sélection d'au moins un rapport, et pivote parallèlement à l'axe de coulissement des crosses, dans un premier sens pour le passage du rapport non synchronisé, et dans un second sens, opposé au premier, pour le passage d'un rapport équipé d'un synchroniseur et commandé par une crosse extrême (21), et un organe de verrouillage (30) qui est entraîné avec l'organe de commande (38) lors du coulissement de sélection et qui immobilise les crosses non sélectionnées, caractérisé en ce qu'il comporte des moyens (46, 42) de déplacement de la crosse extrême de rapport équipé d'un synchroniseur dans le second sens, jusqu'à la mise en action du synchroniseur (10), dès que l'organe de verrouillage (30) a libéré cette crosse.

2. Dispositif de freinage suivant la revendication 1, caractérisé en ce qu'il comporte un ressort (46) de rappel d'un axe coulissant (1) portant la crosse extrême (21) vers la position de mise en action du synchroniseur (10).

3. Dispositif suivant l'une des revendications précédentes, caractérisé en ce que la crosse extrême (21) comporte, dans sa branche (40) opposée à la branche de passage du rapport équipé d'un synchroniseur, une échancrure (42) d'emboîtement sur l'organe de commande (38).

4. Dispositif suivant la revendication 3, caractérisé en ce que l'échancrure (42) est ménagée à la partie radialement extérieure de la branche (40) de la crosse (21), l'organe de verrouillage (30, 25) coopérant avec les fonds des crosses.

5. Dispositif suivant l'une des revendications précédentes, caractérisé en ce que l'organe de verrouillage (30) a la forme d'un étrier dont les branches latérales (28, 29) sont prolongées par des pattes de verrouillage (25, 26) tournées l'une vers l'autre mais légèrement espacées.

6. Dispositif suivant l'une des revendications précédentes, caractérisé en ce que l'organe de verrouillage (30) et le doigt de commande (38) sont solidaires en translation seulement.

7. Dispositif suivant la revendication 6, caractérisé en ce que le doigt de commande (38) est solidaire d'un axe de sélection et de passage (32) portant l'organe de verrouillage (30) mais susceptible de pivoter par rapport à ce dernier.

8. Dispositif suivant l'une des revendications précédentes, caractérisé en ce que l'extrémité libre de la patte de verrouillage (25) comporte un chanfrein (50) de guidage de sa pénétration dans la crosse extrême (21).

9. Dispositif suivant l'une des revendications précédentes, caractérisé en ce qu'il comporte un ressort (36) de rappel axial de l'organe de verrouillage (30) et du doigt de commande (38) vers la position de point mort.

## Patentansprüche

1. Einrichtung zum Bremsen der Zahnräder eines Kraftfahrzeuggetriebes mit einem nicht synchronisierten Übersetzungsverhältnis und wenigstens einem mit einer Synchronisiereinrichtung versehenen Übersetzungsverhältnis, die mit Hilfe wenigstens einer verschiebbaren Gabel (21, 22, 23) eingelegt werden, die durch ein Wähl- und Schaltorgan (38) angetrieben wird, das für die Wahl wenigstens eines Übersetzungsverhältnisses senkrecht zur Richtung der Verschiebung der Gabeln verschoben wird und sich für die Einschaltung des nicht synchronisierten Übersetzungsverhältnisses in einer ersten Richtung und für die Einschaltung eines mit einer Synchronisiereinrichtung versehenen und durch eine Außengabel (21) gesteuerten Übersetzungsverhältnisses in einer zweiten, zur ersten entgegengesetzten Richtung parallel zur Schubachse der Gabeln verschwenkt, und einem Verriegelungsorgan (30), das bei der Wahlverschiebung mit dem Antriebsorgan (38) angetrieben wird und die nicht gewählten Gabeln blockiert, dadurch gekennzeichnet, daß es Mittel (46, 42) zum Bewegen der Außengabel des mit einer Synchronisiereinrichtung versehenen Übersetzungsverhältnisses in der zweiten Richtung bis zur Aktivierung der Synchronisiereinrichtung (10) besitzt, sobald das Verriegelungsorgan (30) diese Gabel freigegeben hat.

2. Bremsvorrichtung nach Anspruch 1, dadurch gekennzeichnet, daß es eine Feder (46) zum Zurückholen einer die Außengabel (21) tragenden Schubachse (1) in die Stellung der Aktivierung der Synchronisiereinrichtung (10) umfaßt.

3. Vorrichtung nach einem der vorhergehenden Ansprüche, dadurch gekennzeichnet, daß die Außengabel (21) in ihrem Schenkel (40), der dem Schenkel für die Einschaltung des mit einer Synchronisiereinrichtung versehenen Übersetzungsverhältnisses entgegengesetzt ist, eine Aussparung (42) zum Eingreifen des Antriebsorgans (38) besitzt.

4. Vorrichtung nach Anspruch 3, dadurch gekennzeichnet, daß die Aussparung (42) in dem radial außen gelegenen Teil des Schenkels (40) der Gabel (21) vorgesehen ist, wobei das Verriegelungsorgan (30, 25) mit den Böden der Gabeln zusammenwirkt.

5. Vorrichtung nach einem der vorhergehenden Ansprüche, dadurch gekennzeichnet, daß das Verriegelungsorgan (30) die Form eines Bügels hat, dessen seitliche Schenkel (28, 29) durch Verriegelungslappen (25, 26) verlängert sind, die einander zugewandt, jedoch in einem leichten Abstand voneinander angeordnet sind.

6. Vorrichtung nach einem der vorhergehenden Ansprüche, dadurch gekennzeichnet, daß das Verriegelungsorgan (30) und der Antriebsdaumen (38) nur in Translationsbewegung miteinander fest verbunden sind.

7. Vorrichtung nach Anspruch 6, dadurch gekennzeichnet, daß der Antriebsdaumen mit einer Wahl- und Schaltachse (32) fest verbunden ist, die das Verriegelungsorgan (30) trägt, jedoch bezüglich dieses verschwenkbar ist.

8. Vorrichtung nach einem der vorhergehenden Ansprüche, dadurch gekennzeichnet, daß das freie Ende des Verriegelungslappens (25) eine Abschrägung (50) zur Führung seines Eintritts in die Außengabel (21) besitzt.

9. Vorrichtung nach einem der vorhergehenden Ansprüche, dadurch gekennzeichnet, daß sie eine Feder (36) zur axialen Zurückholung des Verriegelungsorgans (30) und des Antriebsdaumens (38) in die Nullpunktstellung besitzt.

## Claims

1. Device for braking the gears in a motor vehicle gearbox including a non-synchronized ratio and at least one ratio equipped with a synchronizer which are engaged with the aid of at least one sliding gate (21, 22, 23) entrained by a selection and gear-change member (38) which slides perpendicularly to the direction of sliding of the gates, for the purpose of selecting at least one ratio, and pivots parallel to the axis of sliding of the gates in a first direction for changing from the non-synchronized ratio and in a second direction opposed to the first one for changing from a ratio which is equipped with a synchronizer and controlled by an end gate (21), and a locking member (30) which is entrained with the control member (38) during the selection sliding and which immobilizes the unselected gates, characterized in that it includes means (46, 42) for moving the end ratio gate equipped with a synchronizer in the second direction until the synchronizer (10) is put into action as soon as the locking member (30) has released this gate.

2. Braking device according to Claim 1, characterized in that it includes a spring (46) for returning a sliding shaft (1) carrying the end gate (21) to the position for putting the synchronizer (10) into action.

3. Device according to one of the preceding claims, characterized in that the end gate (21) includes, in its branch (40) opposite the branch for changing from the ratio equipped with a synchronizer, a notch (42) for fitting over the control member (38).

4. Device according to Claim 3, characterized in that the notch (42) is formed at the radially external part of the branch (40) of the gate (21), a locking member (30, 25) interacting with the bottoms of the gates.

5. Device according to one of the preceding claims, characterized in that the locking member (30) has the form of a stirrup the lateral branches (28, 29) of which are extended by locking tabs (25, 26) pointing towards one another but slightly spaced apart.

6. Device according to one of the preceding claims, characterized in that the locking member (30) and the control finger (38) are secured only in terms of translation.

7. Device according to Claim 6, characterized in that the control finger (38) is secured to a selection and gear change shaft (32) carrying the locking member (30) but capable of pivoting with respect to the latter.

8. Device according to one of the preceding claims, characterized in that the free end of the locking tab (25) includes a chamfer (50) for guiding its penetration into the end gate (21).

9. Device according to one of the preceding claims, characterized in that it includes a spring (36) for axially returning the locking member (30) and the control finger (38) to the neutral position.
